# EUROPEAN PATENT APPLICATION

(11) **EP 3 740 039 A1**
(43) Date of publication of application: **18.11.2020**
(21) Application number: 19174842.5
(22) Date of filing: 16.05.2019
(51) Int. Cl.: H05B 33/08, H02J 9/06, H01M 10/44, H02J 7/00

(54) **EMERGENCY LIGHTING DEVICE**

(71) Applicant: Tridonic GmbH & Co. KG, 6851 Dornbirn (AT)
(72) Inventor: deMenezes, Cristiano, Durham, DH1 1pf (GB)
(74) Representative: Rupp, Christian

(57) **Abstract**

The invention relates to an emergency lighting device (202), comprising an output terminal (202c) for driving emergency lighting means, preferably an emergency lighting LED (206) or OLED load, a battery (202a) starting from which the emergency lighting means are driven, a controller (202b) controlling the energy transfer from the battery (202a) to the emergency lighting means, preferably using a feedback control, and designed to monitor the battery voltage and the battery temperature, wherein the controller (202b) is further designed to stop driving the emergency lighting means as soon as the decaying monitored battery voltage reaches a given cut off value. Moreover, the controller (202b) is designed to apply at least two different cut-off values, a low value and a high value, wherein the low value is used for a temperature of the battery (202a) lower than a first threshold value and the high value is used for the temperature higher than a second threshold value.

## Description

### TECHNICAL FIELD OF THE INVENTION

The invention relates to an emergency lighting device. The invention further relates to a method for supplying an emergency lighting device and to a luminaire comprising the emergency lighting device.

### BACKGROUND OF THE INVENTION

Emergency devices are typically required to realize lighting systems in large buildings or complexes, which provide sufficient lighting available in the event of failure of the general power supply. Unless in case of failure of the power supply or other emergencies certain relevant premises or areas are illuminated as before, evacuation or relief can be carried out safely. Accordingly, such emergency lighting units are used in particular for the illumination of walkways and the like.

It is well known that in the emergency mode, where the emergency lighting means are driven from a local or central battery, the emergency mode lighting operation is continued until the monitoring of the battery voltage detects that a minimum voltage called low-voltage-battery-cut-off (LVBCO) is reached. At this defined level, the lighting operation is stopped. The remaining capacity in the battery has to be used to continue non-lighting operations, such as for example supplying controls and communication means of the emergency device.

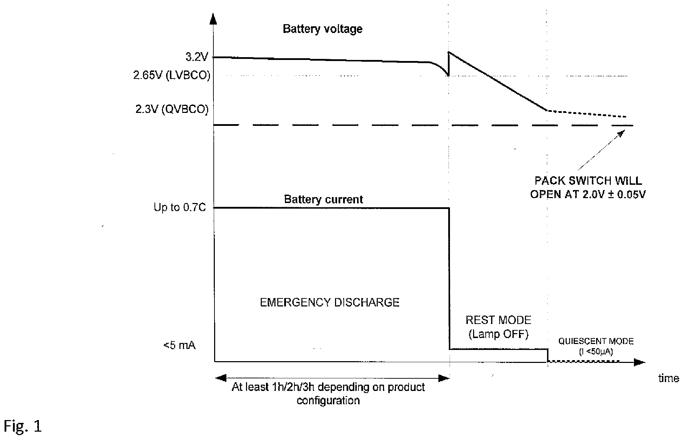

In Fig. 1, the voltage and the current of a typical emergency battery are shown as a function of time. In this figure, typical emergency operation showing all three modes (emergency discharge, rest mode and quiescent mode) are depicted.

The first one is the emergency discharge, where the emergency lighting device, e.g. a lamp is operating to provide emergency lighting. Once the battery voltage goes below the cut-off (LVBCO), the lamp is turned off. From there on, if mains is not restored, the unit enters a low power mode while still keeping all vital functions of a microcontroller active and it is still able to communicate with any communication interface still active. It is usually reserved a small percentage of the battery capacity for that function. Once the voltage keeps decaying and it goes below the quiescent voltage (QVBCO), it will terminate all possible operations and it will enter a ultra-low power mode to prevent the battery from over-discharging.

In prior art documents a fixed cut-off voltage for any battery temperature is used.

However, this approach disadvantageously does not take into account that variations in the temperature of the battery alter the discharge characteristic causing the system to cut-off where there is still capacity to be extracted from the battery.

Thus, it is an objective to provide for an improved emergency lighting device.

### SUMMARY OF THE INVENTION

The object of the present invention is achieved by the solution provided in the enclosed independent claims. Advantageous implementations of the present invention are further defined in the dependent claims.

According to a first aspect of the invention, an emergency lighting device is provided.

The emergency lighting device comprises an output terminal for driving emergency lighting means, preferably an emergency lighting LED or OLED load, and a battery starting from which the emergency lighting means are driven.

Moreover, the emergency lighting device comprises a controller controlling the energy transfer from the battery to the emergency lighting means, preferably using a feedback control, and designed to monitor the battery voltage and the battery temperature, wherein the controller is designed to stop driving the emergency lighting means as soon as the decaying monitored battery voltage reaches a given cut off value. Furthermore, the controller is designed to apply at least two different cut-off values, a low value and a high value, wherein the low value is used for a temperature of the battery lower than a first threshold value and the high value is used for the temperature higher than a second threshold value.

In a preferred embodiment of the emergency lighting device, the cut-off values are set such that the remaining battery capacity after the cut-off is at least 10%.

The remaining capacity of a battery at a given battery voltage largely depends on the temperature. The higher the temperature, the smaller the remaining capacity reserve of the battery at the same battery voltage level.

In a further preferred embodiment of the emergency lighting device, the emergency lighting device comprises a wireless or wired communication interface powered by the battery even after the cut-off of the emergency lighting means.

In a further preferred embodiment of the emergency lighting device, the cut off values for the battery voltage are between 2 and 3 Volt.

In a further preferred embodiment of the emergency lighting device, the difference between the two cut-off values is between 0.3 Volt and 0.8 Volt.

According to a second aspect, the invention relates to a method for operating an emergency lighting device. The method comprises the steps of:
driving emergency lighting means, preferably an emergency lighting LED or OLED load;
controlling an energy transfer from a battery, starting from which the emergency lighting means are driven, to an emergency lighting means, preferably using a feedback control;
monitoring a battery voltage and a battery temperature;
stopping driving the emergency lighting means as soon as the decaying monitored battery voltage reaches a given cut off value; and
applying at least two different cut-off values, a low value and a high value, wherein the low value is used for a temperature of the battery lower than a first threshold value and the high value is used for the temperature higher than a second threshold value.

According to a third aspect, the invention relates to a luminaire, wherein the luminaire comprises an emergency lighting device according to the first aspect, and an emergency lighting LED or OLED load.

### BRIEF DESCRIPTION OF THE DRAWINGS

The invention will be explained in the followings together with the figures.
Fig. 1 shows a typical emergency operation showing all three modes of a battery (emergency discharge, rest mode and quiescent mode) according to prior art;
Fig. 2 shows a luminaire comprising an emergency lighting device according to an embodiment;
Fig. 3 shows different discharge voltage profiles of a battery according to an embodiment;
Fig. 4 shows different discharge voltage profiles of a battery according to an embodiment; and
Fig. 5 shows a method for operating an emergency lighting device according to an embodiment.

### DETAILED DESCRIPTION OF THE PREFERRED EMBODIMENTS

Aspects of the present invention are described herein in the context of an emergency lighting device.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of an emergency lighting device will be presented. However, as those skilled in the art will readily appreciate, these aspects may be extended to aspects of lighting devices without departing from the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

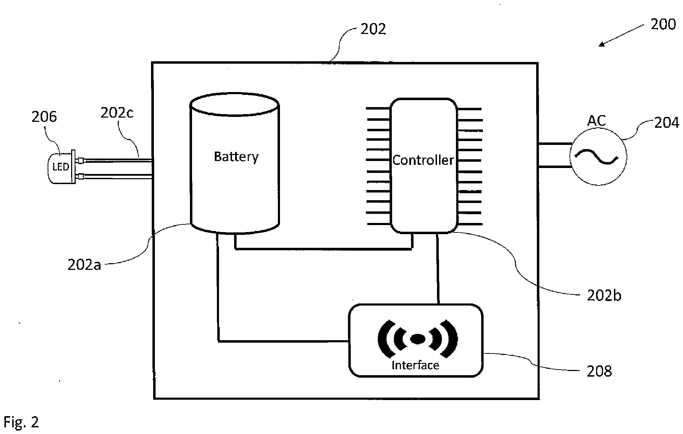

Fig.2 shows a luminaire 200 comprising an emergency lighting device 202 according to an embodiment.

The emergency lighting device 202 comprises an output terminal 202c for driving emergency lighting means, preferably an emergency lighting LED 206 or OLED load. Moreover, the emergency lighting device 202 comprises a battery 202a starting from which the LED 206 is driven.

Furthermore, the emergency lighting device 202 comprises a controller 202b, which controls the energy transfer from the battery 202a to the LED 206, preferably using a feedback control, and designed to monitor the battery voltage and the battery temperature. The controller 202b is further designed to stop driving the LED 206 as soon as the decaying monitored battery voltage reaches a given cut off value, wherein the controller 202b is designed to apply at least two different cut-off values: a low value and a high value, wherein the low value is used for a temperature of the battery 202a lower than a first threshold value and the high value is used for the temperature higher than a second threshold value.

In an embodiment, further levels or even a continuous temperature-dependent adjustment of the LVBCO level can be implemented.

According to an embodiment, the controller 202b switches to a lower LVBCO level as soon as the monitored temperature of the battery falls below a given temperature threshold value.

In an embodiment, the temperature of the battery 202a is measured and the LVBCO is adjusted according to that at low temperatures. It could be either a fixed value (as per diagram) or a linear scale going from, for example, 2.65V down to 2.3V starting to be decreased when the temperature goes below 10 degrees Celsius.

In an embodiment, the temperature of the battery 202a is measured by a temperature sensor which can be mounted on the surface of the cells inside the battery pack.

In another embodiment, the temperature of the battery is estimated based on the controller 202b temperature given the specific luminaire 200.

In a further embodiment, the controller 202c can be configured to use the battery temperature information in order to alter the discharge time of the battery.

This provides the advantage that an extended duration of batteries at low temperatures is achieved. Moreover, a gain of extra capacity during discharge in low temperature is achieved as well.

Furthermore, by having extra emergency lighting duration, there is a higher likelihood of the battery 202a to exceed its design life and reduce potential risk of failures in the field and, therefore, any returns associated with batteries.

In an embodiment, an equation can be implemented in the controller 202b or microcontroller in order to compensate the LVBCO and the quiescent voltage (QVBCO) level depending on the temperature sensing data.

Other advantages which are provided by these embodiments comprise the possibility for the emergency lighting with batteries to work in low ambient temperature, a reduction of battery discharge voltage to adapt to low temperature operation and an increase in obtainable capacity for low temperature operation, i.e. below 10 degrees Celsius.

Moreover, the emergency lighting device 202 comprises a wireless or wired communication interface 208 powered by the battery 202a even after the cut-off of the LED.

Moreover, the emergency lighting device 202 is supplied by an AC voltage supply 204.

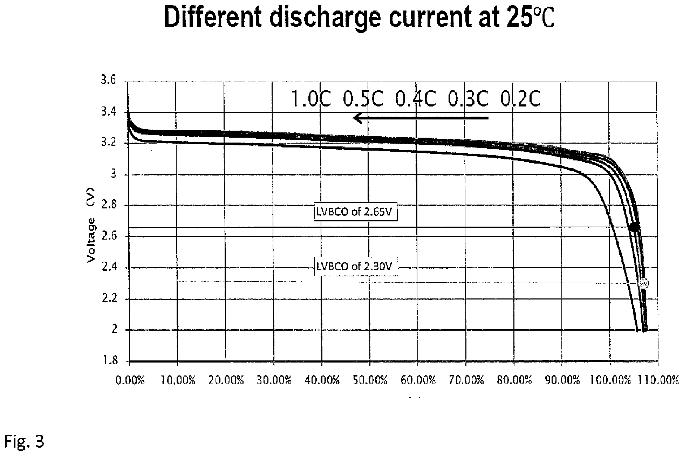

Fig. 3 shows different discharge voltage profiles of a battery as a function of an available relative capacity according to an embodiment.

The charge and discharge current of a battery is measured in C-rate. Most portable batteries are rated at 1 C. This means that a 1000 mAh battery would provide 1000 mA for one hour if discharged at 1 C rate. The same battery discharged at 0.5 C would provide 500 mA for two hours. At 2 C, the 1000 mAh battery would deliver 2000 mA for 30 minutes. 1 C is often referred to as a one-hour discharge; a 0.5 C would be a two-hour, and a 0.1 C a 10-hour discharge.

The capacity of a battery is commonly measured with a battery analyzer. If the analyzer's capacity readout is displayed in percentage of the nominal rating, 100% is shown if a 1000 mAh battery can provide this current for one hour. If the battery only lasts for 30 minutes before cut-off, 50% is indicated.

However, the amount of energy that can be taken from the battery 202a may be reduced once the temperature varies. In particular, at low temperatures, the amount of energy available is lower than what it is at room temperature and consequently the battery voltage profile is altered. Fig. 3 shows the discharge profile at room temperature where defining the LVBCO to 2.65V or 2.30V may alter the amount of capacity obtained from the battery however not so significantly.

Once the battery is operated at lower temperatures, it has its profile significantly altered and setting the LVBCO at 2.65V may not yield as much capacity as originally expected. By lowering the LVBCO to, for example, 2.30V, as much as 10% extra capacity at 5°C can be extracted compared to the case wherein the LVBCO is set to the original 2.65V. In particular, the lower the temperature gets, the bigger will be the impact of the cut-off voltage.

According to an embodiment, the cut off values for the battery voltage are between 2 and 3 Volt.

According to another embodiment, the difference between the two cut-off values is between 0.3 Volt and 0.8 Volt.

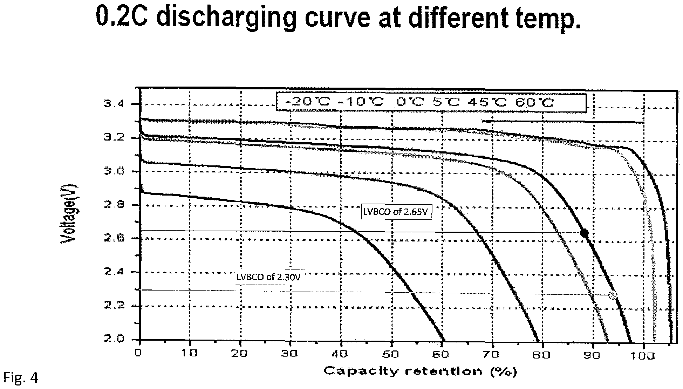

Fig. 4 shows different discharge voltage profiles of a lithium iron phosphate battery across a range of temperature according to an embodiment.

In this embodiment, the battery temperature is used before the discharge of the battery and the LVBCO level is adjusted temporarily while the discharge lasts, so more energy can be taken from the battery during the "emergency discharge" mode and less is left for "rest mode".

According to an embodiment, if the temperature is below 10°C at the start of the discharge, the LVBCO is automatically changed to 2.30V.

According to another embodiment, the cut-off values are set such that the remaining battery capacity after the cut-off is at least 10%.

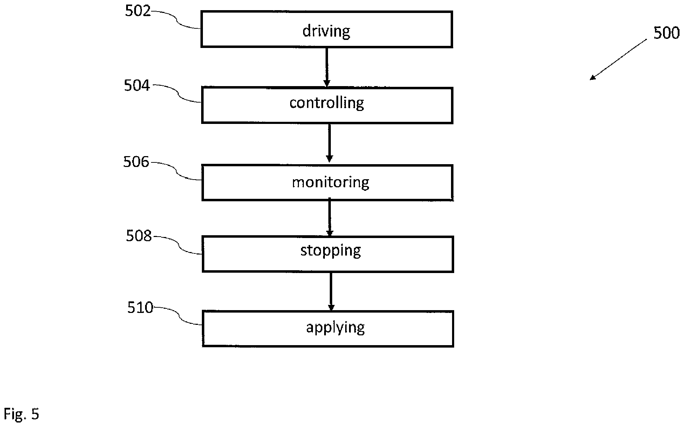

Fig. 5 shows a method 500 for operating an emergency lighting device 202 according to an embodiment.

The method 500 comprises the steps of:
driving 502 emergency lighting means, preferably an emergency lighting LED 206 or OLED load;
controlling 504 an energy transfer from a battery 202a, starting from which the emergency lighting means are driven, to the emergency lighting means, preferably using a feedback control;
monitoring 506 a battery voltage and a battery temperature;
stopping 508 driving the emergency lighting means as soon as the decaying monitored battery voltage reaches a given cut off value; and
applying 510 at least two different cut-off values, a low value and a high value, wherein the low value is used for a temperature of the battery lower than a first threshold value and the high value is used for the temperature higher than a second threshold value.

All features of all embodiments described, shown and/or claimed herein can be combined with each other.

While various embodiments of the present invention have been described above, it should be understood that they have been presented by way of example only and not limitation. Numerous changes to the disclosed embodiments can be made in accordance with the disclosure herein without departing from the spirit of scope of the invention. Thus, the breadth and scope of the present invention should not be limited by any of the above-described embodiments. Rather, the scope of the invention should be defined in accordance with the following claims and their equivalence.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

### Reference Signs

- 200: Luminaire
- 202: Device
- 202a: Battery
- 202b: Controller
- 202c: Terminal
- 204: AC supply
- 206: LED
- 208: Interface

## Claims

1. An emergency lighting device (202), comprising:
an output terminal (202c) for driving emergency lighting means, preferably an emergency lighting LED (206) or OLED load,
a battery (202a) starting from which the emergency lighting means are driven;
a controller (202b) controlling the energy transfer from the battery (202a) to the emergency lighting means, preferably using a feedback control, and designed to monitor the battery voltage and the battery temperature,
wherein the controller (202b) is further designed to stop driving the emergency lighting means as soon as the decaying monitored battery voltage reaches a given cut off value,
**characterized in that**
the controller (202b) is designed to apply at least two different cut-off values, a low value and a high value, wherein the low value is used for a temperature of the battery (202a) lower than a first threshold value and the high value is used for the temperature higher than a second threshold value.

2. Emergency lighting device (202) according to claim 1, wherein the cut-off values are set such that the remaining battery capacity after the cut-off is at least 10%.

3. Emergency lighting device (202) according to any of the preceding claims, comprising a wireless or wired communication interface (208) powered by the battery (202a) even after the cut-off of the emergency lighting means.

4. Emergency lighting device (202) according to any of the preceding claims, wherein the cut off values for the battery voltage are between 2 and 3 Volt.

5. Emergency lighting device (202) according to any of the preceding claims, wherein the difference between the two cut-off values is between 0.3 Volt and 0.8 Volt.

6. Method (500) for operating an emergency lighting device (202), comprising the steps of:
driving (502) emergency lighting means, preferably an emergency lighting LED (206) or OLED load;
controlling (504) an energy transfer from a battery (202a), starting from which the emergency lighting means are driven, to the emergency lighting means, preferably using a feedback control;
monitoring (506) a battery voltage and a battery temperature;
stopping (508) driving the emergency lighting means as soon as the decaying monitored battery voltage reaches a given cut off value; and
applying (510) at least two different cut-off values, a low value and a high value, wherein the low value is used for a temperature of the battery lower than a first threshold value and the high value is used for the temperature higher than a second threshold value.

7. Luminaire (200) comprising an emergency lighting device (202) according to any of claims 1 to 5, and an emergency lighting LED (206) or OLED load.
